# EUROPEAN PATENT APPLICATION

(11) **EP 2 085 573 A2**
(43) Date of publication of application: **05.08.2009**
(21) Application number: 09151744.1
(22) Date of filing: 30.01.2009
(51) Int. Cl.: F01D 5/00, F01D 5/28

(54) **Method for forming a steam turbine bucket with erosion durability**

(30) Priority: 04.02.2008 US 25306
(71) Applicant: General Electric Company, Schenectady, NY 12345 (US)
(72) Inventor: Spiegel, Lyle B., Niskayuna, NY 12309 (US); Demania, Alan Richard, Niskayuna, NY 12309 (US); Zhang, Qingxuan Michael, San Diego, CA 92110 (US)
(74) Representative: Gray, Thomas

(57) **Abstract**

A method for forming a bucket for a steam turbine includes forming a leading edge on at least one airfoil. The leading edge is comprised of an erosion resistant material and is bonded to the airfoil.

## Description

### BACKGROUND

The subject invention relates to steam turbines. More particularly, the invention relates to erosion protection of steam turbine last stage buckets.

Last stage buckets of steam turbines can be exposed to a volatile environment where airfoils, particularly the leading edges of the airfoils, of the bucket are eroded due to moisture. Currently, one method of increasing the durability and erosion resistance of the bucket involves fixing inserts formed from an erosion resistant material, such as cobalt-based stellite, to the leading edges of the bucket airfoils. This method includes precision machining of an insert to match the bucket airfoil, and then fixing the insert to the bucket via electron-beam welding.

This method does not allow the material composition of the insert to be easily adjusted to, for example, increase the alloy composition of the insert, or to add refractory metals such as chromium, molybdenum, tungsten, nickel, tantalum, and/or vanadium as well as refractory metal carbides to further enhance durability and erosion resistance. Further, the electron-beam welding process currently utilized is costly and time-consuming, and must be performed in a vacuum environment. The use of the vacuum environment limits the opportunity to utilize shielding gases for the purpose of controlling the chemistry of the final alloy. Additionally, the electron-beam welding process cannot be utilized to weld a stellite insert to a bucket whose parent alloy is titanium based.

### BRIEF DESCRIPTION OF THE INVENTION

A method for forming a bucket for a steam turbine includes forming a leading edge on at least one airfoil. The leading edge is comprised of an erosion resistant material and is bonded to the airfoil.

### BRIEF DESCRIPTION OF THE DRAWINGS

There follows a detailed description of embodiments of the invention by way of example only with reference to the accompanying drawings in which:
FIG. 1 is a partial perspective view of an embodiment of a last stage bucket;
FIG. 2 is a partial cross-sectional view of an embodiment of an airfoil of the last stage bucket of FIG. 1; and
FIG. 3 is a detail view of one method for forming a leading edge of the airfoil of FIG. 2.

### DETAILED DESCRIPTION

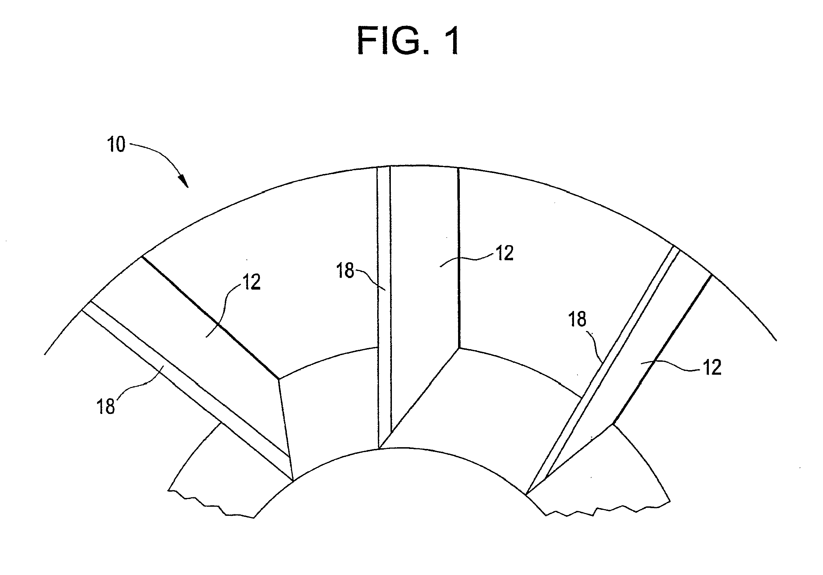

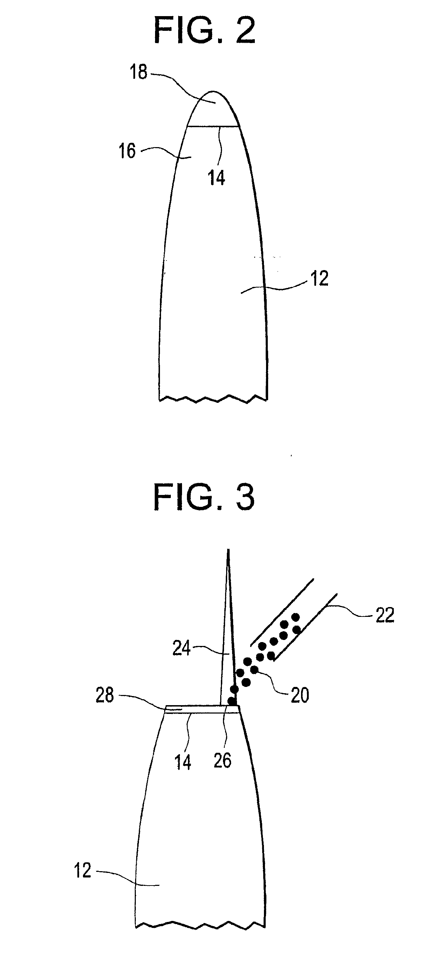

FIG. 1 depicts an embodiment of a steam turbine bucket 10 having a plurality of airfoils 12. In some embodiments, as shown in FIG. 2, the each airfoil 12 includes a forward face 14 at a forward end 16 of each airfoil 12. A leading edge 18 is formed at the forward face 14 from a deposition of a powdered material that is bonded, for example by fusion bonding, to the forward face 14.The material is typically a cobalt-based stellite alloy, which is chosen because it is erosion resistant and enhances the durability of the bucket 10.

The material, in one embodiment, is deposited, and a laser cladding process achieves the fusion bond. As illustrated in FIG. 3, in the laser cladding process, powdered material 20 is ejected from one or more nozzles 22 toward a laser beam 24. The laser beam 24 is directed toward a melt pool 26 portion of the forward face 14. The powdered material 20 interacts with the laser beam 24 and melts in the melt pool 26. The laser beam 24 is then moved, thus moving the melt pool 26. This allows the deposited material in the melt pool 26 to solidify and adhere to the forward face 14. The process is repeated until a clad layer 28 is formed on the forward face 14. To cover the forward face 14 and create the desired leading edge 18 shape, a build up of a plurality of clad layers 28 may be utilized, with each layer 28 adhering to previous layers 28. The process as described above can be repeated to form the plurality of clad layers 28 which adhere to one another resulting in the leading edge shape 18 with a substantial multi-layer thickness of deposited material, as contrasted with a single coating layer over a substrate leading edge 18. In another embodiment, the powdered material may be deposited on the forward face 14 by laser gas nitriding.

Utilization of the laser cladding process allows the material deposited on the forward face 14 to be adjusted as needed. The composition of the material may be enhanced as needed to provide a desired combination of metallurgical properties by adding various alloying elements into the stellite alloy material. Such additional alloying elements may include, for example, refractory metals such as chromium, molybdenum, tungsten, nickel, tantalum, and/or vanadium as well as refractory metal carbides in desired proportions to enhance resistance to heat, wear, and/or corrosion of the deposited material. It is to be appreciated that elements other than those listed above may be added to the stellite material and still be within the scope of the invention.

Further the composition of the deposited material can be modified for particular a particular operating environment or for a particular bucket material. For example, for applications such as nuclear wet stream where cobalt is restricted, a material deposit that results in a cobalt-free leading edge 18 with enhanced erosion resistance can be provided. Further, a material deposit that is base-matched to titanium can be provided when an erosion resistant leading edge 18 is desired for a bucket 10 formed of a titanium-based alloy.

While embodiments of the invention have been described above, it will be understood that, both now and in the future, various improvements and enhancements which fall within the scope of the claims which follow. These claims should be construed to maintain the proper protection for the invention first described.

## Claims

1. A method for forming a bucket for a steam turbine comprising forming a leading edge on at least one airfoil by bonding an erosion-resistant material to the airfoil.

2. The method of claim 1 wherein the erosion-resistant material is fusion bonded to the airfoil.

3. The method of claim 1 wherein the erosion-resistant material is fusion bonded to the airfoil by a laser cladding process.

4. The method of claim 1 wherein forming the leading edge comprises forming a plurality of layers of erosion-resistant material.

5. The method of claim 1 wherein the erosion-resistant material comprises a stellite alloy.

6. The method of claim 5 wherein the erosion-resistant material further comprises one or more refractory metals.

7. The method of claim 6 wherein the one or more refractory metals includes chromium, molybdenum, tungsten, nickel, tantalum, and/or vanadium.

8. The method of claim 1 wherein the leading edge is formed by laser gas nitriding.

9. The method of claim 1 wherein the leading edge is substantially cobalt-free.

10. The method of claim 1 wherein a bucket substrate is a titanium-based alloy.

11. The method of claim 10 wherein the erosion-resistant material is base-matched to the titanium-based alloy.

12. The method of claim 1, wherein the bucket comprises a last stage bucket.

13. The method of claim 1, wherein the steam turbine comprises a plurality of airfoils.
